# EUROPEAN PATENT APPLICATION

(11) **EP 4 807 176 A1**
(43) Date of publication of application: **16.09.2026**
(21) Application number: 25382223.3
(22) Date of filing: 11.03.2025
(51) Int. Cl.: F03D 13/20, E04H 12/08, E04H 12/12, E04H 12/16

(54) **ADAPTER OF A TOWER OF A WIND TURBINE TOWER AND METHOD OF ERECTING THE TOWER**

(71) Applicant: Nordex Energy Spain, S.A.U., 31395 Barasoain (Navarra) (ES)
(72) Inventor: Varela, Fernando, BARASOAIN (ES); Ruiz, Javier, BARASOAIN (ES); Roldan, Iñigo, BARASOAIN (ES)
(74) Representative: Pons IP

(57) **Abstract**

The object of the invention is an adapter of a tower of a wind turbine that does not need to have an area for allocating the anchor bolts for anchoring the concrete section to the adapter, and a wind turbine comprising a tower which in turn comprises the adapter.

## Description

### OBJECT OF THE INVENTION

The object of the invention is an adapter of a tower of a wind turbine that does not need anchor bolts for anchoring the concrete section to the adapter.

The invention also relates to a wind turbine comprising a tower which in turn comprises the adapter and to the method of erecting the tower.

### BACKGROUND OF THE INVENTION

The wind turbines comprise a tower, a nacelle which houses the electrical generator and a rotor formed in turn by at least two blades. The tower of the wind turbine supports the nacelle and the rotor. Large wind turbines have steel, lattice, or reinforced concrete towers or even mixed-type towers, the latter comprising sections of different materials, for example, a lower section of concrete and an upper section of steel or lattice.

Due to the height of the wind turbines, the tower has to be divided into several annular sections which are stacked during the wind turbine assembly stage thus forming the full height of the tower. Dividing the tower into sections has the advantage that each section has a size such that its transport by road or rail is easier.

One of the most commonly used materials for large towers is concrete, since it involves competitive costs and performance compared to those to produce steel towers of similar characteristics. However, the weight of each concrete tower section can easily exceed one hundred tons, this fact being infrequent for metal tower sections, so stacking the concrete sections requires heavy-tonnage lifting and positioning means. The cost of using such lifting and positioning means, which may be for example a crane, is directly related to the tonnage and height that it is capable of handling and the time of use thereof. This high-tonnage crane is also used for lifting and positioning the nacelle, as the weight of the nacelle may also exceed 100 tons.

It is known in the state of the art, the towers for wind turbines being of the kind of "concrete-steel hybrid" towers comprising a first tower section comprising at least two concrete segments and further comprising a second tower section made of steel, the tower further comprising an adapter for connecting the two tower sections, and the towers for wind turbines being of the kind of "full-concrete" towers comprising an adapter disposed in the upper part of the upper concrete tower section and below a wind turbine component, the wind turbine component being preferably the yaw bearing of the nacelle.

In both cases, i.e., for full concrete towers and concrete-steel hybrid towers, the concrete sections need pre-tension, because concrete can only carry loads under compression. To apply pre-tension there are tendons made from steel which need an anchor point in the bottom and an anchor point in the top of the concrete part. In the bottom the tendons are anchored in or at the foundation. This is a proven solution which normally works well. In the top there is usually a transition piece installed made essentially from reinforced concrete where the tendons are anchored by anchor heads. Most of the designs of towers are done with external pre-tension. This means the tendons are on the inner side of the concrete wall elements. Therefore, the pre-tension introduces a bending into the transition piece. This bending is absorbed by anchor bolts which connect in addition the steel part or the components of the wind turbine. According to this design, the compression which needs to be introduced into the concrete wall elements cross the transition piece. This is an inherent disadvantage of the associated to the transition piece made of concrete.

The present invention solves the problems described above.

### DESCRIPTION OF THE INVENTION

The invention relates to an adapter of a tower of a wind turbine, wherein the tower comprises the adapter, a central vertical axis, a concrete section and a plurality of tensioning elements configured to tension the tower;
wherein the concrete section comprises:
   - at least one concrete segment; and
wherein the adapter comprises:
   - a lower flange configured to be joined to the at least one concrete segment;
   - an upper flange configured to be joined to a steel section or a wind turbine component;
   - a central portion joining the lower flange and the upper flange;
wherein the lower flange comprises a plurality of holes configured to allow passage of the plurality of tensioning elements;
wherein the lower flange comprises holes exclusively of the type of the plurality of holes configured to allow the passage, in use, of the plurality of tensioning elements, and
wherein the at least one tensioning element of the plurality of tensioning elements is disposed in the adapter at a first distance from the central vertical axis, wherein the first distance is bigger than a second distance defined from the central vertical axis to at least partially, the inner wall of the at least one concrete segment.

The first distance is measured in a horizontal direction from the central vertical axis to the position of the adapter wherein the at least one tensioning element is fixed. Specifically, the position of the adapter wherein the at least one tensioning element is fixed is defined by an axis of the at least one tensioning element once the at least one tensioning element is fixed in the adapter.

The second distance is measured in a horizontal direction from the central vertical axis to the inner wall of the at least one concrete element in contact with the adapter. More specifically, the second distance is measured in a horizontal direction from the central vertical axis to an upper end of the inner wall of the at least one concrete element in contact with the adapter. In this way, the plurality of tensioning elements configured to tension the tower are also configured to join the adapter to the concrete section.

Optionally, the lower flange, the upper flange and the central portion are made of a single piece.

Optionally, the at least one tensioning element is disposed in the adapter at a third distance from the central portion, wherein the third distance is smaller than a fourth distance defined from the inner wall of the at least one concrete segment to the central portion.

Optionally, the at least one tensioning element is disposed in the adapter at a third distance from an external wall of the central portion, wherein the third distance is smaller than a fourth distance defined from the inner wall of the at least one concrete segment to the external wall of the central portion.

Optionally, the plurality of the tensioning elements is disposed in a circumferential direction of the adapter in a ratio of at least one tensioning element per a sector of 25°.

Optionally, the lower flange comprises at least one step such that it is defined an upper part comprising a lower width than a lower part, the lower part being in contact with the upper surface of at least one concrete segment.

So configured, the adapter does not need to allocate the anchor bolts that are necessary in the state-of-the-art configurations for anchoring the concrete section to the adapter. Furthermore, the adapter is lighter than the transition piece of the state of the art that is made essentially of reinforced concrete where the tendons of the tensioning elements are anchored by anchor heads.

Optionally, the anchor heads rest on the lower flange.

Optionally, the adapter further comprises at least one essentially vertical flange disposed below the lower flange, wherein in use, the at least one essentially vertical flange is intended to be disposed adjacent to, at least partially, an essentially vertical upper surface of the at least one concrete segment of the at least one concrete section. Preferably, the width of the lower flange is greater than the upper surface of the at least one concrete segment. Also preferably, the width of the lower flange is equal to the width of the upper surface of the at least one concrete segment plus the width of the at least one essentially vertical flange.

Optionally, the adapter comprises two essentially vertical flanges disposed below the lower flange, wherein in use, each one of the two essentially vertical flanges is intended to be disposed adjacent to, at least partially, an essentially vertical upper surface of the at least one concrete segment of the at least one concrete section, being an internal essentially vertical upper surface and an external vertical upper surface.

Optionally, the lower flange is intended to be disposed onto, at least partially, a horizontal upper surface of the at least one concrete segment of the at least one concrete section.

Optionally, the adapter further comprises at least one rib configured to stiffen the adapter.

Optionally, the at least one rib is essentially vertical.

Optionally, the at least one rib comprises a free edge.

Optionally, the at least one rib comprises a width defined by the horizontal distance between the central portion of the adapter and the free edge of the at least one rib.

Optionally, the at least one rib comprises a height.

Optionally, the height of the at least one rib is extended from a lower end to an upper end.

Optionally, the lower end of the at least one rib is disposed at a height corresponding to the lower flange of the adapter.

Optionally, the lower end of the at least one rib is supported on the lower flange of the adapter.

Optionally, the lower end of the at least one rib is disposed at a height corresponding to an intermediate position between the lower flange and the upper flange.

Optionally, the upper end of the at least one rib is disposed at a height corresponding to the upper flange of the adapter.

Optionally, the upper end of the at least one rib is disposed at a height corresponding to an intermediate position between the lower flange and the upper flange.

Optionally, the width of the at least one rib decreases from the lower end to the upper end.

Optionally, the width of the at least one rib increases from the lower end to the upper end.

Optionally, the width of the at least one rib is constant from the lower end to the upper end.

Optionally, the width of the at least one rib is variable from the lower end to the upper end.

Optionally, the width of the at least one rib is bigger than the third distance.

Optionally, the width of the at least one rib is smaller than the third distance.

In this way, it is possible to include the at least one rib in those areas of the perimeter of the adapter wherein there is a higher concentration of stresses, thus reducing the amount of material of the adapter. Furthermore, the at least one rib improves the stress distribution to the at least one concrete section.

Optionally, the at least one rib comprises a thickness.

Optionally, the thickness of the at least one rib is constant.

Optionally, the thickness of the at least one rib is variable.

Optionally, the thickness of the at least one rib is smaller that a diameter of one hole of the plurality of holes configured to allow passage of the plurality of tensioning elements.

Optionally, the at least one rib is aligned with one hole of the plurality of holes configured to allow passage of the plurality of tensioning elements in a radial direction coincident with the direction wherein the horizontal distance between the central portion of the adapter and the free edge of the at least one rib is defined.

Optionally, the at least one rib is misaligned with one hole of the plurality of holes configured to allow passage of the plurality of tensioning elements in a radial direction coincident with the direction wherein the horizontal distance between the central portion of the adapter and the free edge of the at least one rib is defined.

Optionally, the at least one rib is an internal rib to the central portion of the adapter.

Optionally, the at least one rib is an external rib to the central portion of the adapter.

Optionally, the adapter comprises a plurality of ribs, the plurality of ribs which may be a combination of at least two ribs, each one of them according to the technical features of the at least one rib described above.

Optionally, the lower flange is a circumferential lower flange.

Optionally, the adapter is made of steel.

Optionally, the adapter is made of cast iron.

So configured, since no crossing of compression forces are necessary, a slender design of the adapter is achieved. Also since no anchor bolts to anchor the adapter to the concrete section are necessary, the at least one steel section can be connected by a flange design with standard bolt connections or by blind hole thread together with a standard bolt. Since the weight of the adapter is minimized, the crane capacity for lifting the adapter is also reduced. The adapter so defined does not limit the principal design of a concrete tower, opposite to the current solutions wherein the principal design with reinforced concrete is the driver design driver for the solution of the tower.

Additional advantages are the following ones:
- Better positioning of anchor heads by machining the at least one rib on the adapter
- The grout for carrying out the fixation of the adapter to the concrete section can be made by means of cannels.
- Specific seals for grout can be introduced.
- Adjustment before grouting possible with adjustment bolts and threads
- Rubber layer instead of grout is possible, therefore significant lower application time compared with grout

The invention also relates to a tower of a wind turbine comprising the adapter described above, a central vertical axis, at least one concrete section and a plurality of tensioning element configured to tension the tower and to anchor the adapter to the concrete section;
wherein the at least one concrete section comprises:
- at least one concrete segment.

Optionally, the tower further comprises at least one steel section disposed above the adapter.

Optionally, the tower further comprises a set of bolts configured to join the at least one steel section to the adapter. Preferably, the set of bolts are configured to join the at least one steel section to the upper flange of the adapter.

Optionally, the plurality of tensioning element is anchored to the lower flange by means of anchor heads.

The invention also relates to a method of erecting a tower of a wind turbine, wherein the tower comprises the adapter, a central vertical axis, at least one concrete section and at least one tensioning element configured to tension the tower;
wherein the at least one concrete section comprises:
   - at least one concrete segment; and
wherein the adapter comprises:
   - a lower flange configured to be joined to the at least one concrete segment;
   - an upper flange configured to be joined to an upper steel section or a wind turbine component; and
   - a central portion joining the lower flange and the upper flange; and
wherein the lower flange comprises a plurality of holes configured to allow passage of the plurality of tensioning elements;
wherein the lower flange comprises holes exclusively of the type of the plurality of holes configured to allow the passage, in use, of the plurality of tensioning elements; and
wherein the at least one tensioning element of the plurality of tensioning elements is disposed in the adapter at a first distance from the central vertical axis, wherein the first distance is bigger than a second distance defined from the central vertical axis to at least partially, the inner wall of the at least one concrete segment; wherein the method comprises:
   - a step of erecting the concrete section;
   - a step of erecting the adapter above the concrete section;
   - a step of tensioning the tower by anchoring the plurality of tensioning elements to the lower flange of the adapter and to anchor the adapter to the concrete section.

### DESCRIPTION OF THE FIGURES

To complement the description being made and for the sake of a better understanding of the characteristics of the invention according to a preferred practical embodiment thereof, attached as an integral part of said description are a set of drawings wherein, for the purpose of illustration and not limiting the scope of the invention, the following is shown:

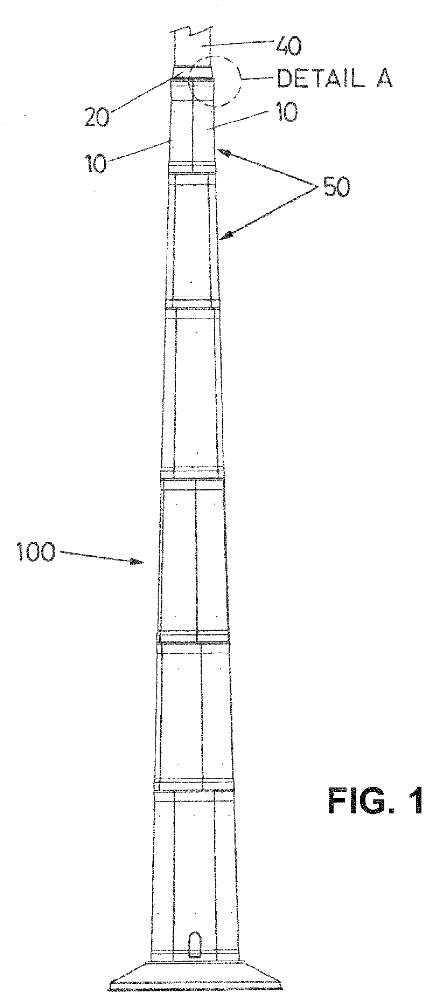

Figure 1 shows an elevation view of a tower of a wind turbine comprising an adapter according to the invention.
Figure 2 shows a section view of a first embodiment of a detail A shown in Figure 1, wherein it is shown the concrete section, the adapter disposed above the concrete section and a steel section disposed above the adapter.
Figure 3 shows a section view of a second embodiment of the invention, wherein it is shown the concrete section, the adapter disposed above the concrete section.
Figure 4 shows a section view of a third embodiment of the invention, wherein it is shown the concrete section, the adapter comprising internal ribs disposed above the concrete section, and a steel section disposed above the adapter.
Figure 5 shows a section AA of Figure 4, wherein the tensioning element has not been represented.
Figure 6 shows a section view of a fourth embodiment of the invention, wherein it is shown the concrete section, the adapter comprising external ribs disposed above the concrete section, and a steel section disposed above the adapter.
Figure 7 shows a perspective view of a fourth embodiment of the invention, wherein it is shown the adapter comprising external ribs disposed.
Figure 8 show a section view CC of the fourth embodiment shown in Figure 7, wherein the tensioning element has been represented.
Figure 9 shows a section view BB of Figure 8.
Figure 10 shows a section view of a fifth embodiment of the invention, wherein it is shown the concrete section, the adapter comprising external ribs disposed above the concrete section.
Figure 11 shows a section view of a sixth embodiment of the invention, wherein it is shown the concrete section, the adapter comprising internal and external ribs disposed above the concrete section, and a steel section disposed above the adapter.

### PREFERRED EMBODIMENT OF THE INVENTION

The following is a detailed description of the adapter (20) of a tower (100) of a wind turbine, wherein the tower (100) comprises the adapter (20), a central vertical axis (A1), at least one concrete section (50) and a plurality of tensioning elements (30) configured to tension the tower (100);
wherein the concrete section (50) comprises:
   - at least one concrete segment (10); and
wherein the adapter (20) comprises:
   - a lower flange (1) configured to be joined to the at least one concrete segment (10);
   - an upper flange (2) configured to be joined to an upper steel section (40) or a wind turbine component;
   - a central portion (3) joining the lower flange (1) and the upper flange (2); and wherein the lower flange (1) comprises a plurality of holes (6) configured to allow passage of the plurality of tensioning elements (30);
wherein the lower flange (1) comprises holes (6) exclusively of the type of the plurality of holes (6) configured to allow the passage, in use, of the plurality of tensioning elements (30), and
wherein the at least one tensioning element (30) of the plurality of tensioning elements (30) is disposed in the adapter (20) at a first distance (d1) from the central vertical axis (A1), wherein the first distance (d1) is bigger than a second distance (d2) defined from the central vertical axis (A1) to the inner wall (12) of the at least one concrete segment (10).

Furthermore, at least one tensioning element (30) of the plurality of tensioning elements (30) is disposed in the adapter at a third distance (d3) from the central portion (3), wherein the third distance (d3) is smaller than a fourth distance (d4) defined from the inner wall (12) of the at least one concrete segment (10) to the central portion (3).

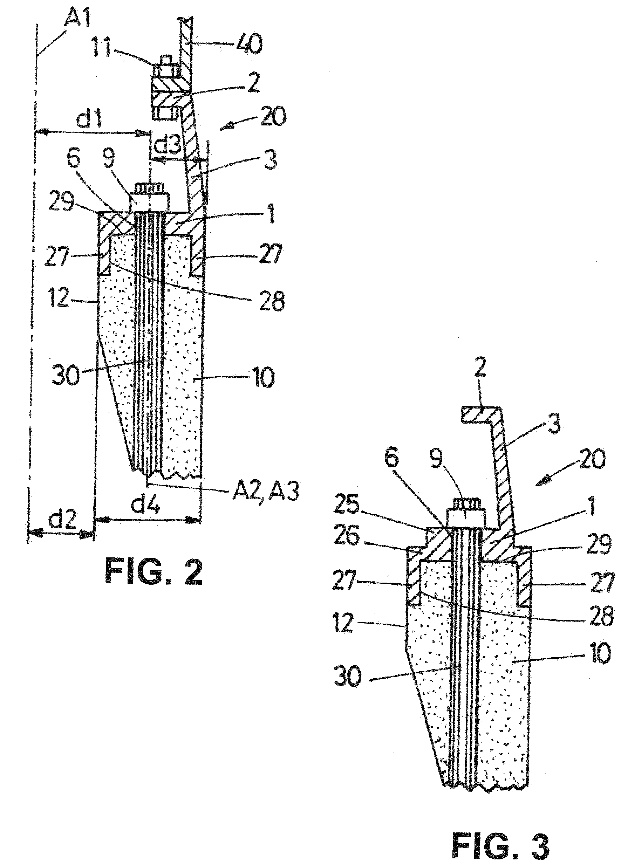

In a first embodiment shown in Figure 2, the adapter (20) comprises two essentially vertical flanges (27) disposed below the lower flange (1), wherein in use, each one of the two essentially vertical flanges (27) is intended to be disposed adjacent to, at least partially, an essentially vertical upper surface (28) of the at least one concrete segment (10) of the at least one concrete section (50), being an internal essentially vertical upper surface and an external vertical upper surface.

The lower flange (1) is intended to be disposed onto, at least partially, a horizontal upper surface (29) of the at least one concrete segment (10) of the at least one concrete section (50).

In a second embodiment shown in Figure 3, as well as the technical features of the adapter of the first embodiment, the lower flange (1) of the adapter (20) further comprises at least one step (25, 26) such that it is defined an upper part (25) comprising a lower width than a lower part (26), the lower part (26) being in contact with the direction wherein the horizontal upper surface (29) of at least one concrete segment (10).

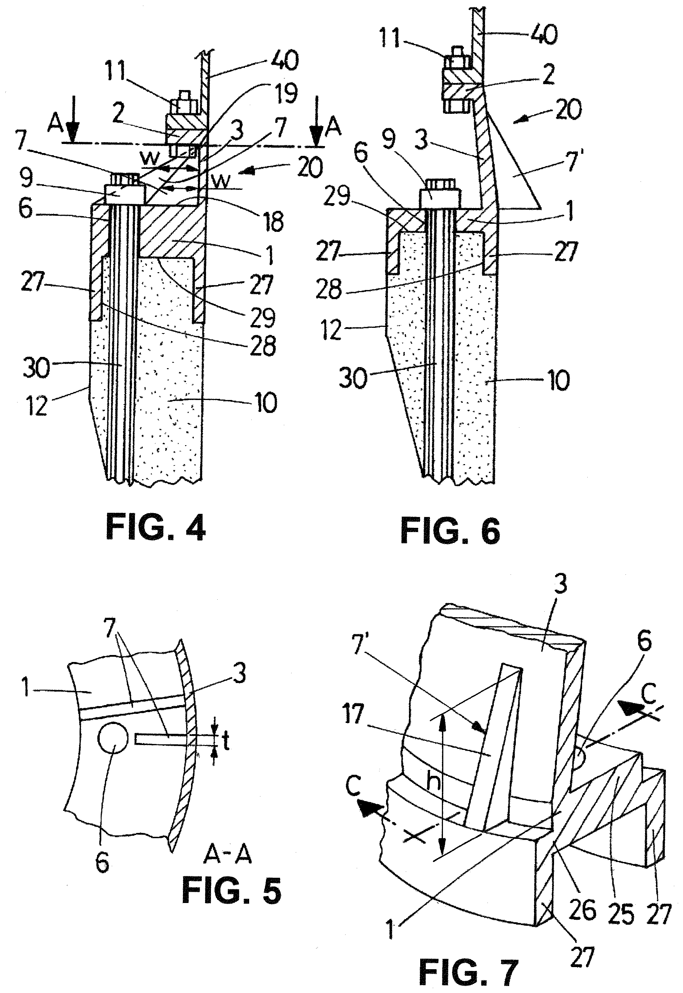

In a third embodiment shown in Figure 4 and 5, as well as the technical features of the adapter of the first embodiment, the adapter (20) further comprises at least one rib (7) configured to stiffen the adapter (20). The at least one rib comprises a free edge (17) and a width (w) defined by the horizontal distance between the central portion (3) of the adapter (20) and the free edge (17) of the at least one rib (7). The at least one rib is essentially vertical and comprises a height (h). The height (h) of the at least one rib (7) is extended from a lower end (18) to an upper end (19). The at least one rib (7) comprises a thickness (t), preferably a constant thickness (t).

In the embodiment shown in Figures 4 and 5 only two ribs (7) are shown. However, the adapter (20) may comprise a similar sequence of ribs (7) along a circumferential direction of the adapter (20).

In this third embodiment, the adapter (20) comprises at least two internal ribs (7) to the central portion (3) of the adapter (20). The lower ends (18) of the at least two internal ribs (7) are disposed at a height corresponding to the lower flange (1) of the adapter (20) and the upper ends (19) of at least two internal ribs (7) are disposed at a height corresponding to the upper flange (2) of the adapter (20).

Also, the width (w) of the at least two internal ribs (7) decrease from the lower end (18) to the upper end (19).

The width (w) of one of the at least two ribs (7) is bigger than the third distance (d3) whereas the width (w) of the other of the at least two ribs (7) is smaller than the third distance (d3),In this way, it is possible to include the at least two internal ribs (7) in those areas of the perimeter of the adapter (20) wherein there is a higher concentration of stresses, being in this embodiment in the proximity of the hole (6) of the plurality of holes (6) configured to allow the passage, in use, of the plurality of tensioning elements (30),

In this third embodiment, the thickness (t) of the at least two internal ribs (7) is smaller than a diameter of one hole (6) of the plurality of holes configured to allow passage of the plurality of tensioning elements (30).

Also, one of the at least two ribs (7) is aligned with one hole (6) of the plurality of holes configured to allow passage of the plurality of tensioning elements (30) in a radial direction coincident with the direction wherein the horizontal distance between the central portion (3) of the adapter (20) and the free edge (17) of the at least one rib (7) is defined, whereas the other of the at least two ribs (7) is misaligned with one hole (6) of the plurality of holes configured to allow passage of the plurality of tensioning elements (30) in a radial direction coincident with the direction wherein the horizontal distance between the central portion (3) of the adapter (20) and the free edge (17) of the at least one rib (7) is defined.

In a fourth embodiment shown in Figure 6, the adapter (20) comprises the technical features of the adapter of the first embodiment and additionally at least one external rib (7') configured to stiffen the adapter (20). The at least one external rib (7') comprises a free edge (17) and a width (w) defined by the horizontal distance between the central portion (3) of the adapter (20) and the free edge (17) of the at least one rib (7'). The at least one rib (7') is essentially vertical and comprises a height (h). The height (h) of the at least one rib (7') is extended from a lower end (18) to an upper end (19). The at least one rib (7') comprises a thickness (t), preferably a constant thickness (t).

In the embodiment shown in Figure 6 only one rib (7') is shown. However, the adapter (20) may comprise a similar sequence of ribs (7) along a circumferential direction of the adapter (20).

In this fourth embodiment, the at least one external rib (7') comprises a lower end (18) disposed at a height corresponding to the lower flange (1) of the adapter (20) and an upper end (19) disposed at a height corresponding to the upper flange (2) of the adapter (20).

Additionally, the at least one external rib (7') is disposed cantilevered on the adapter (20), preferably on the central portion (3) of the adapter (20).

Also, the width (w) of at least one external rib (7') decreases from the lower end (18) to the upper end (19).

Also, the at least one external rib (7') is aligned with one hole (6) of the plurality of holes configured to allow passage of the plurality of tensioning elements (30) in a radial direction coincident with the direction wherein the horizontal distance between the central portion (3) of the adapter (20) and the free edge (17) of the at least one rib (7) is defined.

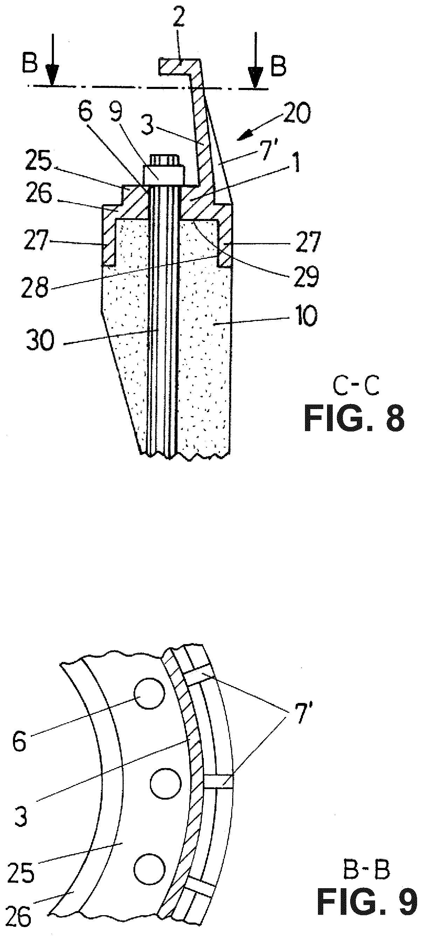

In a fifth embodiment shown in Figures 7 to 9, the adapter (20) comprises the technical features of the second embodiment and at least one external rib (7') comprising the technical features of the fourth embodiment except that the at least one external rib (7') is not cantilevered and comprises a lower end (18) disposed at a height corresponding to the lower flange (1) of the adapter (20) and an upper end (19) disposed at a height corresponding to an intermediate position between the lower flange (1) and the upper flange (2). In this embodiment, the lower end (18) of the at least one rib (7') is supported on the lower flange (1) of the adapter (20), preferably on an external bead of the lower flange (1).

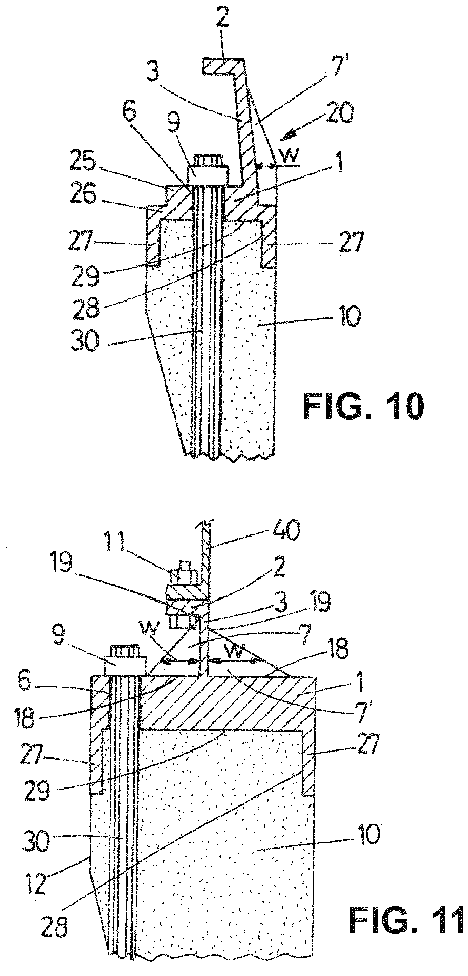

In a sixth embodiment shown in Figure 10, the adapter (20) comprises at least one rib (7') wherein the width (w) decreases from the lower end (18) to the upper end (19) in a non-uniform way.

In a seventh embodiment shown in Figure 11, the adapter comprises at least one internal rib (7) and at least one external rib (7').

Preferably, the at least one internal rib (7) and at least one external rib (7') are aligned in a radial direction coincident with the direction wherein the horizontal distance between the central portion (3) of the adapter (20) and the free edge (17) of the each rib (7, 7') is defined.

Alternatively, the at least one internal rib (7) and at least one external rib (7') are misaligned in a radial direction coincident with the direction wherein the horizontal distance between the central portion (3) of the adapter (20) and the free edge (17) of the each rib (7, 7') is defined.

Furthermore, each one, the two or none of the ribs (7, 7') is aligned with one hole (6) of the plurality of holes configured to allow passage of the plurality of tensioning elements (30) in a radial direction coincident with the direction wherein the horizontal distance between the central portion (3) of the adapter (20) and the free edge (17) of the at least one rib (7) is defined.

The lower ends (18) of the at least two ribs (7, 7') are disposed at a height corresponding to the lower flange (1) of the adapter (20) and the upper ends (19) are disposed at different heights. Preferably, the at least one internal rib (7) is higher than the at least one external rib (7').

The invention also relates to a tower (100) of a wind turbine comprising the adapter (20) of any one of the two embodiments described above, at least one concrete section (50), at least one steel section (40) disposed above the adapter (20) and a plurality of tensioning elements (30) configured to tension the tower (100); and
a set of bolts (11) configured to join the at least one steel section (40) to the adapter (20);
wherein the concrete section (50) comprises:
   - at least one concrete segment (10).

Preferably, the plurality of tensioning elements (30) is anchored to the lower flange (1) by means of anchor heads (9).

Preferably, the set of bolts are configured to join the at least one steel section to the upper flange (2) of the adapter (20).

## Claims

1. Adapter (20) of a tower (100) of a wind turbine, wherein the tower (100) comprises the adapter (20), a central vertical axis (A1), at least one concrete section (50) and a plurality of tensioning elements (30) configured to tension the tower (100);
wherein the concrete section (50) comprises:
- at least one concrete segment (10); and
wherein the adapter (20) comprises:
- a lower flange (1) configured to be joined to the at least one concrete segment (10);
- an upper flange (2) configured to be joined to an upper steel section (40) or a wind turbine component;
- a central portion (3) joining the lower flange (1) and the upper flange (2); and
wherein the lower flange (1) comprises a plurality of holes (6) configured to allow passage of the plurality of tensioning elements (30);
**characterized in that** the lower flange (1) comprises holes (6) exclusively of the type of the plurality of holes (6) configured to allow the passage, in use, of the plurality of tensioning elements (30), and
wherein the at least one tensioning element (30) of the plurality of tensioning elements (30) is disposed in the adapter (20) at a first distance (d1) from the central vertical axis (A1), wherein the first distance (d1) is bigger than a second distance (d2) defined from the central vertical axis (A1) to the inner wall (12) of the at least one concrete segment (10).

2. The adapter of claim 1, wherein at least one tensioning element (30) of the plurality of tensioning elements (30) is disposed in the adapter at a third distance (d3) from the central portion (3), wherein the third distance (d3) is smaller than a fourth distance (d4) defined from the inner wall (12) of the at least one concrete segment (10) to the central portion (3).

3. The adapter of claim 2, further comprising at least one rib (7, 7') configured to stiffen the adapter (20).

4. The adapter of any of previous claims, wherein the at least one rib (7, 7') comprises a free edge (17) and a width (w) defined by a horizontal distance between the central portion (3) of the adapter (20) and the free edge (17) of the at least one rib (7, 7').

5. The adapter of any of claims 3 to 4, wherein the at least one rib (7, 7') is essentially vertical.

6. The adapter of any of claims 3 to 5, wherein the at least one rib (7, 7') comprises a height (h), wherein the height (h) is extended from a lower end (18) to an upper end (19).

7. The adapter of any of claims 3 to 6, wherein the at least one rib (7, 7') comprises a thickness (t), preferably a constant thickness (t).

8. The adapter of claim 7, wherein the thickness (t) of the at least one rib (7, 7') is smaller than a diameter of one hole (6) of the plurality of holes configured to allow passage of the plurality of tensioning elements (30).

9. The adapter of any one of claims 3 to 8, wherein the at least one rib (7, 7') comprises at least one internal rib (7) and/or at least one external rib (7').

10. The adapter of claim 9, wherein the at least one internal rib (7) and/or at least one external rib (7') is aligned with one hole (6) of the plurality of holes configured to allow passage of the plurality of tensioning elements (30) in a radial direction coincident with the direction wherein the horizontal distance between the central portion (3) of the adapter (20) and the free edge (17) of the at least one rib (7) is defined.

11. The adapter of claim 9, wherein the at least one internal rib (7) and/or at least one external rib (7') is misaligned with one hole (6) of the plurality of holes configured to allow passage of the plurality of tensioning elements (30) in a radial direction coincident with the direction wherein the horizontal distance between the central portion (3) of the adapter (20) and the free edge (17) of the at least one rib (7) is defined.

12. The adapter of any one of claims 6 to 11, wherein the lower end (18) of the at least one rib (7, 7') is supported on the lower flange (1) of the adapter (20) and/or the upper end (19) of the at least one rib (7, 7') is disposed at a height corresponding to the upper flange (1) of the adapter (2) or to an intermediate position between the lower flange (1) and the upper flange (2).

13. The adapter of any of previous claims, wherein the plurality of the tensioning elements (30) is disposed in a circumferential direction of the adapter (20) in a ratio of at least one tensioning element (30) per a sector of 25°.

14. Tower (100) of a wind turbine comprising the adapter (20) of any of claims 1 to 13, a central vertical axis (A1), at least one concrete section (50) comprising at least one concrete segment (10) and a plurality of tensioning element (30) configured to tension the tower (100) and to anchor the adapter (20) to the concrete section (50).

15. The tower (100) of claim 14, further comprising at least one steel section (40) disposed above the adapter (20).

16. Method of erecting a tower (100) of a wind turbine, wherein the tower (100) comprises the adapter (20), a central vertical axis (A1), at least one concrete section (50) and a plurality of tensioning elements (30) configured to tension the tower (100);
wherein the at least one concrete section (50) comprises:
- at least one concrete segment (10); and
wherein the adapter (20) comprises:
- a lower flange (1) configured to be joined to the at least one concrete segment (10);
- an upper flange (2) configured to be joined to an upper steel section (40) or a wind turbine component;
- a central portion (3) joining the lower flange (1) and the upper flange (2); and
wherein the lower flange (1) comprises a plurality of holes (6) configured to allow passage of the plurality of tensioning elements (30);
wherein the lower flange (1) comprises holes (6) exclusively of the type of the plurality of holes (6) configured to allow the passage, in use, of the plurality of tensioning elements (30); and
wherein the at least one tensioning element (30) of the plurality of tensioning elements (30) is disposed in the adapter (20) at a first distance (d1) from the central vertical axis (A1), wherein the first distance (d1) is bigger than a second distance (d2) defined from the central vertical axis (A1) to the inner wall (12) of the at least one concrete segment (10).
**characterized in that** the method comprises:
- a step of erecting the concrete section (50);
- a step of erecting the adapter (20) above the concrete section (50);
- a step of tensioning the tower by anchoring the plurality of tensioning elements (30) to the lower flange (1) of the adapter (20).
